(19) Europäisches Patentamt
European Patent Office
Office européen des brevets

(11) EP 2 866 046 B1

(12) EUROPEAN PATENT SPECIFICATION

(45) Date of publication and mention
of the grant of the patent:
**30.12.2015 Bulletin 2015/53**

(51) Int Cl.:
***G01S 5/00*** *(2006.01)*      ***G01S 5/02*** *(2010.01)*
***G01S 5/22*** *(2006.01)*

(21) Application number: **13190392.4**

(22) Date of filing: **25.10.2013**

(54) **Self-locating mobile receiving device**

Selbstausrichtende mobile Empfangsvorrichtung

Dispositif de réception mobile à localisation automatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2015 Bulletin 2015/18**

(73) Proprietors:
• **Albert-Ludwigs-Universität Freiburg**
**79098 Freiburg (DE)**
• **SICK AG**
**79183 Waldkirch (DE)**

(72) Inventors:
• **Wendeberg, Johannes**
**79110 Freiburg (DE)**

• **Höflinger, Fabian**
**79110 Freiburg (DE)**
• **Schindelhauer, Christian**
**79110 Freiburg (DE)**
• **Reindl, Leonhard**
**79110 Freiburg (DE)**
• **Hippenmeyer, Heinrich**
**79348 Freiamt (DE)**

(74) Representative: **Hehl, Ulrich**
**SICK AG**
**Intellectual Property**
**Erwin-Sick-Strasse 1**
**79183 Waldkirch (DE)**

(56) References cited:
**US-A1- 2012 214 515     US-A1- 2013 083 631**
**US-B1- 7 636 061**

## Description

The invention relates to a self-locating mobile receiving device and a method for localizing a mobile receiving device according to the preamble of claim 1 and 14, respectively.

The rise of mobile technology in every-day life and the employment of mobile autonomous agents in industrial logistics has led to an increasing demand for location based services in indoor scenarios. In industrial logistics applications, for example, a large number of autonomous agents transport goods based on dynamic assignments. Forwarding goods from a material source to a drain requires absolute localization in the working environment. Navigation satellite based solutions lack connectivity in these environments, so alternatives must be considered.

Known indoor localization systems include a set of electromagnetic or ultrasound transmitters to replace the satellite signals. The receiver to be located may adopt various strategies to evaluate these signals including RSSI (Received Signal Strength Indicator) and TOF (Time of Flight). Instead of determining the absolute time of flight from a transmitter to a receiver, time difference of arrival (TDoA) or frequency distance of arrival (FDoA) systems evaluate the differences of signals travelling on more than one signal path.

However, the RSSI is often distorted by objects in the direct signal path and its vicinity and also by environmental interference like air humidity. Systems using time of flight, on the other hand, strongly depend on precise synchronization. The actual localization errors introduced by synchronization delays depend on the nature of the signals and their propagation speed. Thus, errors are more significant in case of electromagnetic waves than in case of ultrasound signals. In any case, synchronization needs means of communication. The cabling for wired communication increases installation costs, while wireless communication is limited in distance and may be unreliable or even not be tolerated in industrial environments.

Common indoor localization systems also require an initial calibration step to gain knowledge of transmitter positions. This adds to the installation costs and requires skilled personnel.

More background information regarding existing indoor localization systems can be found in J. Wendeberg et al. "Self-Localization based on Ambient Signals", Theoretical Computer Science, 453:98-109, 2012; T. Janson et al. "Self-Localization Application for iPhone using only Ambient Sound Signals", Proceedings of the 2010 International Conference on Indoor Positioning and Indoor Navigation (IPIN), pages 259-268, Nov. 2010; J. Wendeberg et al. "Calibration-Free TDOA Self-Localization", Journal of Location Based Services, 2013; and F. Höflinger et al. "Acoustic Self-calibrating System for Indoor Smartphone Tracking (ASSIST)"; Proceedings of the 2012 International Conference on Indoor Positioning and Indoor Navigation (IPIN), 2012.

US 2013/0083631 A1 discloses a sound-based positioning system determining an initial position using multilateration and updating the current position taking account of the reliability of sound signals. One implementation is based on time difference of arrival (TDoA) using allotted time slots, i.e. in a synchronized framework.

US 2012/0214515 A1 describes a mobile device indoor navigation based on sounds captured by the microphone of the mobile device. One approach again is synchronized TDoA.

It is therefore an object of the invention to provide improved indoor localization.

This object is satisfied by a self-locating mobile receiving device and a method for localizing a mobile receiving device according to claim 1 and 14, respectively. The receiving device evaluates signals received from a plurality of transmitters, in particular stationary transmitters. Although any signal may be used, including electromagnetic signals like radio or light, ultrasound signals are particularly useful in indoor applications. Of course, both transmitters and receiving device are of the appropriate type.

Preferably, at least three transmitters are within reach at any time, so that more transmitters can be installed in larger areas or where intermitting objects in the line of sight are expected. For each received signal, the evaluation identifies the respective transmitter and determines a reception point in time, resulting in a number of time stamps after repeated measurements. In case of a frequency based method, the reception point in time may be a phase. Based on transmitter identity, associated reception point in time, and transmitter positions, the mobile receiving device is localized.

The invention starts from the basic idea that localization does not require synchronization of the transmitters among each other and/or with the receiving device. No information about the transmission points in time when a transmitter emits a signal has to be communicated. Instead, information about transmission points in time or related variables, like mutual offsets of transmission points in time, is estimated using the reception points in time.

The fact that the estimation does not require synchronization does not necessarily exclude synchronization. For example, components may initially be synchronized, with the estimation during operation compensating drifts.

The invention has the advantage that the costs and installation effort for localization is reduced to a minimum. At the same time, high accuracy and robustness of the localization of an arbitrary number of receiving devices is possible. The receiving device can be passive and therefore does not need any means of generating a signal to contact the transmitters. The transmitters do not need any wired or wireless connection.

The evaluation unit is preferably configured to identify a transmitter by correlation with a known transmission pattern. The transmission pattern encodes the identity. By correlation with known transmission patterns which might be used by transmitters, the receiving device identifies the transmitter that sent a received signal. The correlation peak can also determine the reception point in time.

The evaluation unit is preferably configured to estimate the position of the receiving device with a time difference of arrival (TDoA) and/or a frequency difference (FDoA) of arrival method. Both methods may be implemented for a complementary evaluation, for example enhancing the TDoA localization by another FDoA localization.

The evaluation unit is preferably configured to estimate the position of the receiving device with a recursive filter, in particular a particle filter or a Kalman filter. In case of a moving device, closed calculation of the device's position is not possible because there are more variables than constraints. By using recursive filters, the history is also considered. Plausibility assumptions, like a maximum speed of the receiving device or a continuous movement, may increase filter performance.

The recursive filter preferably also estimates transmission points in time and/or mutual offsets of transmission points in time. There is thus one filter for estimating both the missing synchronization information and the position of the receiving device.

The evaluation unit is preferably configured for a self-calibration determining at least one of identities of transmitters within reach, transmitter positions, and a time interval between transmissions of a transmitter. The calibration procedure thus does not require professional staff and is extremely easy.

The evaluation unit is preferably configured to evaluate an intensity of a received signal in order to enhance the estimation of the position of the receiving device. The intensity could for example be used for a second, independent localization, which is subsequently used for a comparison or a weighted averaging. Intensity can also be used for a plausibility test to detect multipath propagation.

The receiving device preferably comprises an inertial measurement unit for measuring an acceleration, wherein the evaluation unit is configured to include the acceleration in the estimation of the position of the receiving device. The acceleration may be linear and/or rotational. Acceleration information may be used to internally track the position of the receiving device. Another device to that end is an odometer. During usual operation, the internal tracking information may be used to increase accuracy of localization. In case that an insufficient number signals is received from the transmitters due to range limitations or obstacles, the internal tracking can temporarily take over.

The receiving device preferably comprises an interface to transfer device information including the position of the receiving device to a base station. The interface may also be used to receive commands or parameters from the base station. Any known technology can be used for the interface, including wireless standards like GSM, UMTS, LTE, or WiFI, or wired standards like Ethernet, USB, Firewire, or Homeplug. The interface is not required for localization, but used for data management, higher-order evaluation or control, like displaying the positions of all receivers and task or movement planning.

In another preferred embodiment, a system comprises at least one mobile receiving device according to the invention and a plurality of stationary transmitters, each of the transmitters transmitting signals encoding the transmitter's identity. As the receiving devices are preferably passive, there is no restriction on the number of receiving devices using the transmitters for self-localization. The transmitters can be stationary and arbitrarily placed, but preferably a number of at least three transmitters cover any possible position of a receiving device.

The transmitters preferably transmit their signals independently. The transmitters are therefore unsynchronized. This makes both the transmitters as a device and their installation extremely simple. They do not have a connection with or any other means of receiving information from each other. They do not know or care for the other transmitter's activity.

Signalling periods and/or transmission points in time of any one of the transmitters is preferably neither communicated to the other transmitters nor to the mobile receiving devices. No information regarding timing of the transmitters is exchanged. Only by its specific estimator, but independent of synchronization, will the receiving device at least implicitly reconstruct the timing when estimating its position.

Each of the transmitters preferably transmits its signal periodically. In other words, the transmitter emits a signal at regular or equidistant time intervals. The transmitters may all use the same period or add an individual or random element to decrease the risk for signal collisions. In any case, this risk is low, because there are mutual time offsets due to the transmitters being unsynchronized. Additional time offsets are introduced by the variable distance of transmitter and receiving device. In case of signal collisions, the correlator of the receiving device may still be able to separate the signals. Otherwise, the colliding signals may simply be discarded, and a subsequent measurement be used for localization.

The signal transmitted by each of the transmitters is preferably an individual burst or an individual chirp. This enables the receiving device to reliably identify the transmitter. Moreover, burst and chirps can be short. This reduces the risk of signal collision, and a low duty cycle is advantageous for its energy-efficiency. For example, a signal of 1 ms could be followed by a break of 300 ms. Generally, the pulse duty factor can range between 1:1 and 1:1000 or less, or more specifically between 1:50 and 1:100.

The transmitters preferably comprise an independent power supply, in particular an energy harvesting device.

This makes transmitters completely independent. In contrast to batteries which in principle can be used, energy-harvesting devices such as indoor photo cells don not need maintenance or replacement.

The method in accordance with the invention can be further developed in a similar manner and shows similar advantages. Such advantageous features are described in an exemplary, but not exclusive manner in the subordinate claims dependent on the independent claims.

The invention will be explained in more detail in the following also with respect to further features and advantages by way of example with reference to embodiments and to the enclosed drawing. The Figures of the drawing show in:

Fig. 1    a three-dimensional overview of a system comprising a plurality of transmitters and a receiving device to be localized;

Fig. 2    a block diagram of a transmitter;

Fig. 3    a block diagram of a receiving device;

Fig. 4    a schematic plan view illustrating measurements for locating a stationary receiving device;

Fig. 5    a schematic plan view illustrating measurements for locating a mobile receiving device;

Fig. 6    a comparison of a receiving device's trajectory and two estimations of the trajectory based on a particle filter and an unscented Kalman filter, respectively; and

Fig. 7    a diagram showing the cumulative distribution function of the receiver error for the two estimations of Figure 6.

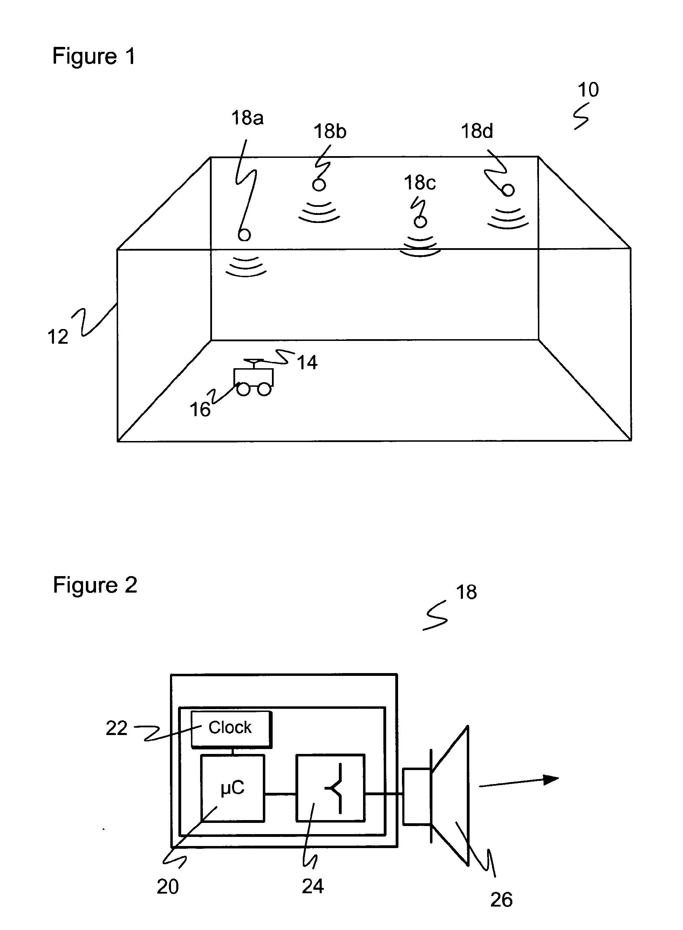

Figure 1 shows an embodiment of a system 10 according to the invention installed in an indoor environment 12, for example a hall or a warehouse. While the system 10 in principle will also work outside, it is described in an indoor application because of competing satellite-based systems available in outdoor applications.

The system 10 comprises a receiving device 14 which is either moving by itself or attached to a moving object 16 like a vehicle, in particular an AGV (Automated Guided Vehicle). The system 10 further comprises a plurality of transmitters 18a-d, sometimes also referred to as beacons, which are randomly placed within the indoor environment 12, for example at a ceiling. A number of three transmitters 18a-c should preferably be in line of sight at any position accessible by the receiving device 14. To that end, a larger number of transmitters 18a-d may be installed, with the illustrated number of four transmitters 18a-d being merely one example.

The task of system 10 is to localize receiving device 14 based on transmission and reception of signals. These signals may be ultrasonic signals, which implies that receiving device 14 is capable of receiving ultrasound and transmitters 18a-d generate ultrasound. However, the system 10 can also use electromagnetic signals instead of ultrasound.

In the system 10, neither transmitters 18a-d nor receiving device 14 are connected to a communication system for synchronization. Consequently, transmitters 18a-d are not synchronized both among one another and with receiving device 14. This does not expressly exclude means of communication and not even synchronization for any conceivable alternative embodiment, but the receiving device 14 in any case does not rely on nor require synchronization, but is able to locate its position based on the timing of received signals alone.

Fig. 2 shows a block diagram of one of the transmitters 18. The transmitter 18 comprises a control 20, a clock 22, signal processing means 24, and a loudspeaker or ultrasound generating means 26. The signal to be emitted is generated by the control 20, amplified and possibly filtered by signal processing means 24, and emitted by the ultrasound generating means 26.

The signal is modulated by a transmission pattern encoding the identity of transmitter 18. This can be done with any known modulation scheme, for example in a pulse sequence, a burst, or a chirp. The known method of chirp spread spectrum represents bits using a rising and falling frequency sweep. Chirp spread spectrum is robust against multipath effects, where several echoes of the same signal may reach receiving device 14 in phase and out of phase. By using a chirp spread spectrum, the amplified and attenuated signals are in balance because all energy shares are considered.

Each transmitter 18a-d emits its individually modulated signal periodically and independent of the other transmitters 18a-d. Transmitters 18a-d can thus be simple in construction and do not need communication means or control. Periodic transmission implies that preferably short signals are emitted at a specific rate. The period may or may not vary from transmitter 18a-d to transmitter 18a-d. Since transmitters 18a-d are unsynchronized, different periods can be achieved by each transmitter 18a-d using an individual or random period. The starting points of period transmission are arbitrary due to the unsynchronized activity. The mutual time offsets of transmitters are therefore unknown even if transmitter positions and the time intervals defining the activity periods are determined. Sender offsets would anyway need to be continuously observed because of drifts of the clocks 22. Receiving device 14 has no knowledge of transmission points in time or the periods between two transmissions.

As each of the transmitters 18a-d is active without consideration of the other transmitters' 18a-d activity, the risk of signal collisions is high. However, loss of a few signals is acceptable, and it is assumed that collisions can be detected and the signals be discarded.

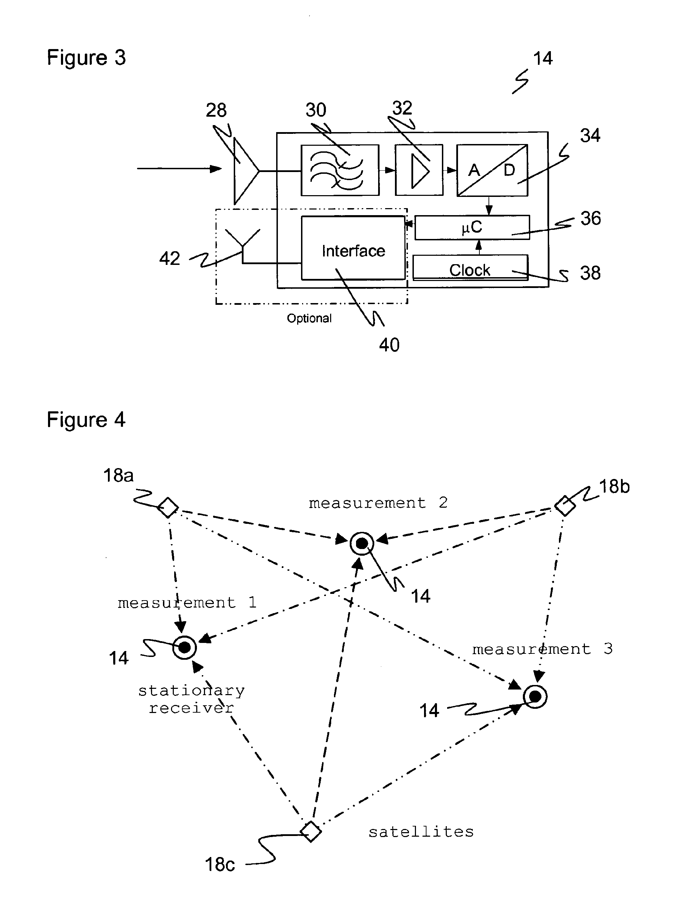

Figure 3 shows a block diagram of receiving device 14, which comprises an analog reception path with a microphone or ultrasonic receiving means 28, filtering means 30, amplifying means 32, an A/D converter 34, a control 36, and a clock 38. The signals, after having passed the analog reception path, are digitally analyzed by control 36. The evaluation detects both the identity of the transmitter 18a-d and a reception point in time from a signal. In other words, control 36 can detect the presence of a specific transmitter 18a-d and determine the exact reception point in time when its signal reaches receiving device 14. One method of identifying a transmitter is cross-correlation of received signal and each of a number of transmission patterns that could have been used to identify the transmitters 18a-d. The correlation peaks both indicate the reception points in time and reveal the unique identifier of the transmitter 18a-d where the signal originated.

In addition to that measurement information, control 36 has a memory where the transmitter positions are stored. These have been parameterized or determined in a calibration process. The reception points in time, also referred to as time stamps, and the transmitter positions are used to calculate the position of the receiving device 14. Methods for both an automatic self-calibration to determine the transmitter positions in a preparatory step and to locate the receiving device 14 without synchronization will be described in later sections of this description. The memory may also be used to store a software containing an implementation of the functions of control 38.

The receiving device 14 may optionally comprise an interface 40 for data communication, which preferably operates according to a wireless standard, as symbolized by antenna 44. This interface 40 is not necessary for the localization, but is used to transmit device information to a base station or to receive parameters or control commands from the base station.

The problem of localizing receiving unit 14 is comparably simple if it temporarily stops to collect measurements from transmitters 18a-d within reach. This is illustrated in Figure 4. The receiving device 14, marked as "stationary receiver", stops at three examplary measurement positions to gather signals from the transmitters 18a-d marked as "satellites".

As these measurements occur from the same position, using the time differences of arrival results in hyperbolic equations which can be solved by conventional algorithms like linear estimators or by few iterations of the Gauss-Newton algorithm. Yet even in the stationary situation, transmitter positions and mutual time offsets of the transmitters 18a-d have to be known which complicates matters.

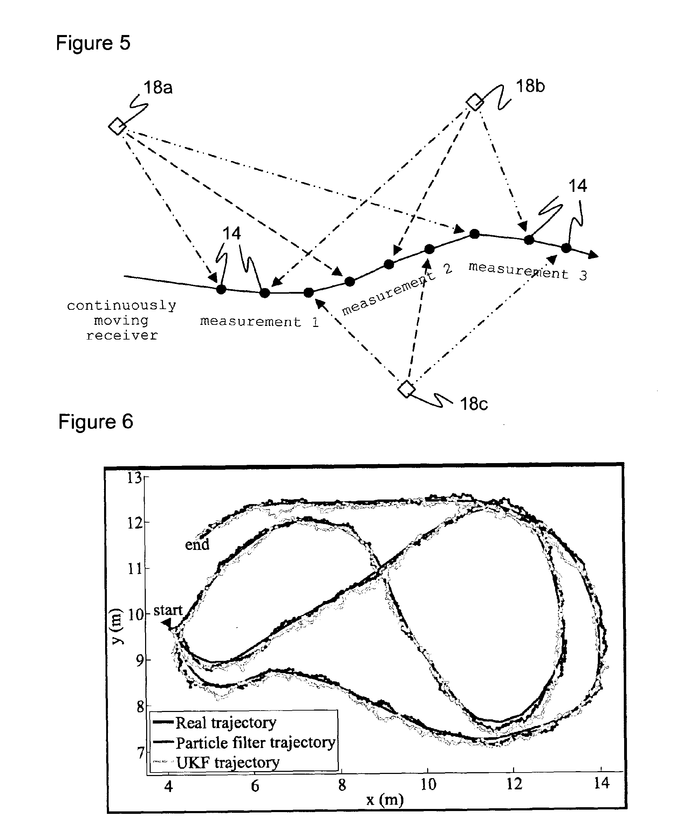

Figure 5 shows a more natural situation where the receiving device 14 continually moves along a trajectory. The measurements take place at different positions, increasing the number of variables and generating an under-determined equation system. The equations are no longer hyperbolic. This problem will later on be tackled by recursive state estimation algorithms with the assumption of a continuous trajectory. As the hyperbolic equations lead to a non-linear observation model, using the Extended or the Unscented Kalman filter is advisable. Alternatively, a particle filter is used which is robust against non-Gaussian observations and which can represent a non-Gaussian state estimation, yet at the price of higher computational cost. In contrast to optimization or closed-form calculation, recursive filters initially require some iterations to generate useful results, so position data is available only after some time, even if the mutual time offsets of the transmitters were known.

An alternative approach to solving the continuous movement problem of Figure 5 is to make simplifying assumptions. As a first rough approximation, the movement of the receiving device 14 is ignored. The velocity of receiving device 14 is probably small, so the positioning error by ignoring movement during the short time interval needed to capture the signals can be expected to also be small. A somewhat more advanced approach estimates a velocity of the receiving device 14 from previous localization and extrapolates a constant movement. Then, the positions of the receiving device 14 are reduced to a linear function, making the problem no more complex than in the stationary case.

Having described the localization problem and the inventive solution in more general terms, the remainder of the description will introduce detailed mathematical embodiments. Although the equations and algorithms are a preferred implementation of the invention, there are other possibilities, with the scope of the invention being defined by the claims.

Formal description of the localization problem

We consider the localization problem of receiving device 14, subsequently referred to as the receiver, moving on an unknown trajectory in two-dimensional Euclidean space. An extension to three dimensions is possible, and the implementation straightforward by merely increasing the state vector size. $\boldsymbol{M}_t \in \mathbb{R}^2$ denotes the position of the receiver at time $t$. A number of $m$ stationary transmitters 18a-d, subsequently referred to as senders, is placed randomly at unknown positions $S_i$, $(1 \le i \le m)$. Every sender emits discrete signals at regular points in time with a period defined by a fixed interval $I_i$. The interval may differ from sender to sender.

Then, the transmission point in time or sending time of the $k_i$-th signal at sender position $S_i$ is described by

$$t_{k_i i} = t_{0i} + k_i I_i, \quad (k_i > 0). \qquad (1)$$

Furthermore, we assume that a $k_i$-th signal of sender $S_i$ propagates in a straight line from the sender to the receiver and is received at reception point in time

$$T_{k_i i} = \frac{1}{c} \|M - S_i\| + t_{k_i i} \qquad (2)$$

where $c$ is the signal velocity and $\|\cdot\|$ denotes the Euclidean norm. Furthermore, we assume that the signals can be distinguished, as explained previously.

The computation of the length of the intervals of the different senders by the receiver is straightforward by receiving two or more successive signals $k_1$, $k_2$, $k_1 \neq k_2$, emitted by the same sender $S_i$ while it is temporarily stationary. Then the interval for sender $S_i$ is

$$I_i = \frac{1}{k_1 - k_2} \left( T_{k_1 i} - T_{k_2 i} \right). \qquad (3)$$

The transmission points in time or sending timestamps, as well as the positions of the senders and the current receiver position, remain unknown up to now, and only the signal speed $c$ and the time when a signal has been received, $T$, are known. To successfully compute the position of the receiver, more effort is needed.

In addition to this, the senders are assumed to be unsynchronized, i.e. they send their signals after different intervals $S_i$ and have a different initial transmission point in time or send time $t_{0i}$. Consequently, there is an unknown time offset $\delta_{ij}$ between the senders, which describes the send time difference between senders $S_i$ and $S_j$. It is calculated by

$$\delta_{ij} = t_{0i} - t_{0j} = \left( t_{k_i i} - k_i I_i \right) - \left( t_{k_j j} - k_j I_j \right). \qquad (4)$$

If all $\binom{m}{2}$ offsets are known or equal to zero, the senders are considered synchronized. Since the offsets are transitive, only $m$ - 1 offsets need to be computed, relative to one sender. Considering the case that the receiver is continuously moving, signals are received at different positions. This results in the following hyperbolic equation in which two signals, originating from two different senders $S_i$ and $S_j$, are received at the positions $M_{k_i i}$ and $M_{k_{ij}}$:

$$\frac{1}{c} \left( \|M_{k_i i} - S_i\| - \|M_{k_j j} - S_j\| \right) = \Delta t_{ij} + \delta_{ij}, \qquad (5)$$

where $\Delta_{tij}$ represents the unsynchronized time difference of arrival of the two signals originated by $S_i$ and $S_j$, which may be calculated based on the reception times and the intervals as

$$\Delta t_{ij} = \left( T_{k_i i} - T_{k_j j} \right) - \left( k_i I_i - k_j I_j \right). \qquad (6)$$

In this equation, m is the number of senders, so $m$ - 1 offsets are required. Assuming the intervals $I_i$ and $I_j$ to be known, there exist $2nm + (m$ - 1) unknown variables after $n$ received signals from each sender and therefore unknown receiver positions (cf. Figure 5). It is apparent that this equation cannot be solved in closed form and without further knowledge of or assumptions on the scenario.

<u>(Automatic) Calibration and sender localization</u>

For the system to be operable, the identifiers and positions of the transmitters 18a-d need to be known in receiving device 14. Although it is conceivable to manually parameterize receiving device 14 accordingly or to perform a conventional position measurement, it is preferred to save this information in receiving device 14 after an automatic calibration method. A set of possible transmission patterns identifying a transmitter 18a-d can be known per default and can moreover be reduced to those transmission patterns actually received during calibration.

It is more involved to calculate the sender positions. Calculation should solely be based on evaluation of the time differences observed by the receivers. This eliminates the need to manually measure senders, enabling the user of the localization system to install them at arbitrary places. Thus, sort of a "plug-and-play" localization system is provided.

Calculation of the sender positions is a one-time task. Once the sender positions are known, the position information is downloaded by the receivers, so they may localize themselves with respect to the senders.

For localization of the senders only by measurements of unknown receivers, an adaption of two approaches may be applied, the Ellipsoid TDoA method (see "Self-Localization based on Ambient Signals", loc. cit.) and a statistical approach that estimates the distance between senders based on the distribution and minima/maxima of the observed reception times (cf. "Self-Localization Application for iPhone using only Ambient Sound Signals", loc. cit.).

For the statistical algorithms, the receiver has to be brought close to every sender, such that the receiver and every pair of senders are aligned and the maximum possible time difference is produced. Alternatively, the receiver moves on a trajectory beyond the vicinity of the senders. If the receiver moves slowly in comparison to the signal velocity, an approximation of the time differences at certain points can be measured.

To compute the distances between sender pairs, the Ellipsoid TDoA method uses linear regression to calculate an approximation of the distances of three senders $S_i$, $S_j$, and $S_k$ based on the ellipsoid equation

$$ax^2 + by^2 + cxy + dx + ey = 1\,, \tag{7}$$

given the observed TDoA measures. This equation can be transformed into a translation-invariant form

$$\hat{a}\left(x - \hat{d}\right)^2 + \hat{b}(y - \hat{e})^2 + \hat{c}(x - \hat{d})(y - \hat{e}) = 1\,, \tag{8}$$

where $\hat{a}$, $\hat{b}$ and, $\hat{c}$ are translation-invariant parameters that characterize the ellipse, and $(\hat{d}, \hat{e})$ is the shift of the ellipse center, which equals the synchronization offset of the senders. One can calculate an approximation of the distances $d_1 \approx \|S_i - S_j\|$ and $d_2 \approx \|S_i - S_k\|$ based on the parameters $\hat{a}$, $b$ and, $\hat{c}$ from Eq. (8) by

$$d_1 = 2\sqrt{\frac{\hat{b}}{4\hat{a}\hat{b} - \hat{c}^2}} \quad ; \quad d_2 = 2\sqrt{\frac{\hat{a}}{4\hat{a}\hat{b} - \hat{c}^2}}\,. \tag{9}$$

Using the "MinMax" procedure, therefore evaluating the minimum and maximum occurring TDoA, the time difference of every measurement point and the first point is calculated by

$$\tau_{si} = T_{si} - T_{0i} - kI_i\,. \tag{10}$$

$T_{si}$ describes the timestamp of the signal which has been received at measurement point s, and $T_{0i}$ describes the timestamp for the first point, respectively. Once the time shift has been determined for all stops and all senders the difference of these shifts is be calculated for each stop by

$$\Delta t_{sij} = \tau_{si} - \tau_{sj}\,. \tag{11}$$

This calculation results in sets of time differences for each sender pair, $K_{ij} = \{\Delta t_{0ij}, ..., \Delta t_{sij}\}$. The distance between two of those senders is an approximation of the maximum and minimum values of the respective set for senders $S_i$ and $S_j$:

$$\|S_i - S_j\| \approx d_{ij} = \frac{c}{2}\left(\max\left(\mathcal{K}_{ij}\right) - \min\left(\mathcal{K}_{ij}\right)\right)\,. \tag{12}$$

After one of the distance approximation procedures has been applied, where the choice of the algorithm depends on the flexibility of receiver movements and the availability of calibration measurements, the distances are known, and the senders can be placed in a coordinate system by solving a problem of multi-dimensional scaling (cf. J. Kruskal et al., "Multidimensional Scaling", Sage Publications, 1978).

The precision of the Ellipsoid TDoA method depends on the *far-field assumption* of the receiver, therefore if the receiver is too close to the senders, an error is induced into the distance calculation, leading to an under-estimation of the sender distances. The precision of the MinMax procedure depends on the availability of measurements on the "long edges" of the senders, therefore an alignment of each pair of two senders and the receiver on a line. As only a single maximum time difference is evaluated, the MinMax procedure is also prone to measurement errors. Such errors may be compensated by error mitigation algorithms such as RANSAC (Random Sample Consensus).

Probabilistic state estimation

As discussed above, the equation system in (5) for the situation of Figure 5 is under-determined and cannot be calculated directly, as only one equation is available for every receiver position. Instead, we consider the positioning problem of a continuously moving receiver as a recursive state estimation problem. We will describe two novel approaches based on probabilistic state estimation to enable robust localization of the mobile receiver, once the senders have been located, only by the reception times of the signals from the senders.

A Bayesian filtering scheme has been successfully applied to TDoA problems previously, yet for estimation of a moving sender (cf. J. Wendeberg et al. "Robust Tracking of a Mobile Beacon Using Time Differences of Arrival with Simultaneous Calibration of Receiver Positions", Proceedings of 2012 International Conference on Indoor Positioning and Indoor Navigation (IPIN); 2012). The Bayesian filtering scheme is a probabilistic approach to recursive state estimation based on the Markov assumption, i.e. the assumption that the current state depends only on the previous state, not on the previous trajectory.

We present an approach based on a stochastic Monte-Carlo simulation, also known as *particle filter*, which is robust to motion and measurement uncertainties, and therefore well suited for TDoA localization. Furthermore, we present an approach based on the *unscented Kalman filter*, which is an efficient algorithm that is robust even in a non-linear problem setting. It turns out that using a particle filter yields a robust solution, yet at high computational cost, and that the unscented Kalman filter (UKF) is still reliable and at the same time computationally efficient.

In a recursive Bayesian filter, the probability $p(x_t|z_{1:t}, u_{1:t})$ of state $x_t$ at time $t$ is assumed to depend on the obtained sensor data $z_{1:t}$ and control commands $u_{1:t}$. The posterior distribution, or *belief*, can be described by the recursive update equation

$$p(x_t|z_{1:t}, u_{1:t}) = \eta_t p(z_t x_t) \int p(x_t|u_t, x_{t-1}) p(x_{t-1}|u_{1:t-1}, z_{1:t-1}) dx_{t-1} , \qquad (13)$$

where the parameter $\eta_t$ is a normalizing constant ensuring that $\int p(x_t|u_{1:t}, x_{1:t}) dx_t = 1$. The state transition probability $p(x_t|u_t, x_{t-1})$ and the measurement probability $p(z_t|x_t)$ are specified by the motion model and sensor model, respectively. In our approach, we use the particle filter and the unscented Kalman filter, which are implementations of the Bayesian filtering model. The particle filter uses a set of *particles* to represent a state hypothesis, approximating the current belief. The unscented Kalman filter uses the knowledge of the noise factors involved in the system to estimate a Gaussian probability function of the state. The non-linear functions, which are characteristical for TDoA, are linearized in the *unscented transform.*

For both algorithms we estimate the same state, consisting of the position vector $M_t$ of the receiver at time $t$, as well as the movement velocity of the receiver $V_t$.

Since the senders are unsynchronized, the time offsets $\delta_{ij}$ need to be estimated as well. In order to calculate the offset between $S_i$ and $S_j$ with respect to the sending times $t_{0i}$, $t_{0j}$ we use the equation

$$\delta_{ij} = (k_i l_i + t_{0i}) - (k_j l_j + t_{0j}) + \mathcal{U}(-t_{\text{dist}}, t_{\text{dist}}) , \qquad (14)$$

where $u$ is uniformly distributed noise in a time range of $t_{\text{dist}}$. As the offsets are transitive, we settle to estimate $m$ - 1 offsets. Without loss of generality we estimate only the offset relative to sender $j = 1$ and define $\delta_i = \delta_{1i}$, where $\delta_1 = 0$.

Also the sending time of one sender must be estimated, as in TDoA only relative distances are measured. To propagate the estimated sending time of the latest received signal of sender $i$, we use the last estimated sending time, the interval length, and a uniform distributed noise term as

$$t_{k_i i} = t_{(k_i-1)i} + l_i + \mathcal{U}(-t_{\text{dist}}, t_{\text{dist}}) . \qquad (15)$$

We add the uniformly distributed noise $u$ to increase the variance of the estimated offsets. As the send times $t_{kii}$ are all relative, we estimate only $t_{k11}$. Altogether, the state vector is

$$x_t = \left( M_t^T, V_t^T, t_{k_1 1}, \delta_1, \dots, \delta_m \right)^T .$$

(16)

The algorithms use a motion model to propagate the state hypothesis in the current time step based on the previous belief, as well as a sensor model which determines the likelihood of observed measurements. The design of the motion model is crucial for the proper estimation of the state transition, and therefore for efficiency and accuracy of the localization. For both algorithms we use the same motion model, which is based on the model in the article "Robust Tracking of a Mobile Beacon Using Time Differences of Arrival with Simultaneous Calibration of Receiver Positions", loc. cit. In the model, we assume that no control over the movement of the receiver is given, hence the control command represents just the time which has passed since the last computation. For the movement, and therefore the next estimated position of the receiver, we use a constant velocity model. This model assumes that the receiver moves with constant velocity, while changes in the velocity are undetermined, which is modeled by Gaussian noise with a covariance matrix $\Sigma_v$. In this model, the position and velocity of the receiver are updated according to the Euler integration scheme by

$$M_{t+1} = M_t + h_t V_t$$
$$V_{t+1} = V_t + \zeta_t , \qquad \zeta_t \sim \mathcal{N}(0, \Sigma_V) ,$$

(17)

where $h_t = T_{ki} - T_{kj} > 0$ is the time between the current signal from sender $i$ and the previous signal from sender $j$.

A. Particle Filtering

The particle filter, also known as Monte Carlo localization, recursively approximates the current system state based on the previous system state. For an explanation of the particle filter, see also "Robust Tracking of a Mobile Beacon Using Time Differences of Arrival with Simultaneous Calibration of Receiver Positions", loc. cit. A set of particles of size $N$ represents the current belief p($x_t$|$z_{1:t}$,$u_{1:t}$). Each particle $\left( x_t^{[h]}, w_t^{[h]} \right)$, ($1 \le h \le N$) represents a hypothesis of the system state at time $t$ and consists of a system state $x_t^{[h]}$ and the so-called importance weight $w_t^{[h]}$. Using the motion model, the particle filter estimates the values in the current step. The sensor model computes the probability $p\left( z_t \mid x_t^{[h]}, w_{t-1}^{[h]} \right)$ of the measured information $z_t$ given the state $x_t^{[h]}$ and the previous importance weight $w_{t-1}^{[h]}$.

The recursive belief update of the particle filter is done according to the following three steps:

1. In the *prediction step,* the hypothetical state of a particle $x_t^{[h]}$ at time $t$ is estimated by drawing a successor state based on the proposal distribution $p\left( x_t^{[h]} \mid u_t, x_t^{[h]} \right)$ specified by the motion model. The motion uncertainty and the control command $u_t$ are taken into account in the *prediction step.*

2. In the *correction step,* a current measurement $z_t$ is used to update the weight, $w_t^{[h]} \propto w_{t-1}^{[h]}, p\left( z_t \mid x_t^{[h]} \right)$ of each particle. Therefore, the likelihood of the state hypothesis is computed using the sensor model and $z_t$.

3. In the *resampling* step, a set of $N$ particles is drawn, replacing the weighted state hypothesis, i.e. the probability of drawing a particle is proportional to its weight.

In our proposed implementation, *resampling* is executed if the effective number of particles $N_{\text{eff}}$, is smaller than the number of $\frac{N}{2}$ particles, where

$$N_{\text{eff}} = \left( \sum_{h=1}^{N} \left( w_t^{[h]} \right)^2 \right)^{-1} .$$

(18)

The particles represent the estimated state as described in Eq. (16). The sensor model uses the measurement

$z_j = T_{kj}$, which is the timestamp of last received signal originating from sender $j$, to compute the probability that the observed measurement matches the current belief. Here, we assume that the different measurements are independent, given the current state $x_t$ of the system. Therefore, the probability of the current measurement, given the system state $x_t$, is the product of all measurements:

$$p(\boldsymbol{z}_t | \boldsymbol{x}_t) = \prod_{j=0}^{k} p(z_j | \boldsymbol{x}_t). \qquad (19)$$

To evaluate the estimated values, each measurement $z_j$ is taken into account. Based on the known sender positions $S_j$ and the estimated values $\boldsymbol{M}_t$, $t_{k_1 1}$, and $\delta_j$, a hypothesis of the observation is calculated by

$$d_{tj} = \frac{1}{c} \| \boldsymbol{M}_t - \boldsymbol{S}_j \| + \left( t_{k_1 1} + \delta_j \right). \qquad (20)$$

Using this hypothesis $d_{tj}$, the likelihood of a measurement is calculated by

$$p(z_j | \boldsymbol{x}_t) = \mathcal{N}\left( z_j, d_{tj}, \sigma_{\text{sensor}}^2 \right), \qquad (21)$$

where $\sigma_{\text{sensor}}^2$ is a variance estimation of the sensor noise, which is assumed to be Gaussian distributed.

### B. Unscented Kalman Filtering

The unscented Kalman filter (UKF), which was proposed by Julier and Uhlman in "New Extension of the Kalman Filter to Nonlinear Systems" in AeroSense'97, International Society for Optics and Photonics, 1997, pp. 401-422., 2004, is a recursive state estimator based on the unscented transform, an approach to linearization of non-linear models. For a random variable with dimension $L$, $2L + 1$ "sigma points" are generated deterministically with the known covariance matrix of the involved variables and the tuning parameters of the filter. As the evaluation of the models is calculated only for the $2L + 1$ sigma points, the UKF is cheaper in computation than the particle filter, which requires evaluation of a large number of particles, or the extended Kalman filter, which requires calculation of the Jacobian matrix.

*1) Generating sigma points:* First, an extended mean vector and covariance matrix are generated:

$$
\begin{aligned}
\mu_{t-1}^a &= \begin{pmatrix} \mu_{t-1}^T & \mu_v^T & \mu_m^T & \mu_0^T \end{pmatrix}^T, \\
\Sigma_{t-1}^a &= \begin{bmatrix} \Sigma_{t-1} & 0 & 0 & 0 \\ 0 & \Sigma_V & 0 & 0 \\ 0 & 0 & \sigma_m^2 & 0 \\ 0 & 0 & 0 & \Sigma_0 \end{bmatrix},
\end{aligned} \qquad (22)
$$

where $\Sigma_0$ is the covariance matrix of the offset noise, $\sigma_m^2$ is the variance of the measurement noise, and $\mu_{t-1}$, $\mu_v$, $\mu_m$, and $\mu_0$ are the mean of the previous state, the velocity noise, the measurement noise, and the offset noise, respectively. The velocity and the offset noise are called "process noise".
The augmented mean and variance are used to generate a set of $2L$ sigma points, where $L$ is the dimension of the augmented mean vector:

$$x_{t-1}^a = \begin{bmatrix} {\mu_{t-1}^a}^T \\ \left(\mu_{t-1}^a + \sqrt{(L+\lambda)\Sigma_{t-1,[1]}^a}\right)^T \\ \vdots \\ \left(\mu_{t-1}^a + \sqrt{(L+\lambda)\Sigma_{t-1,[L]}^a}\right)^T \\ \left(\mu_{t-1}^a - \sqrt{(L+\lambda)\Sigma_{t-1,[1]}^a}\right)^T \\ \vdots \\ \left(\mu_{t-1}^a - \sqrt{(L+\lambda)\Sigma_{t-1,[L]}^a}\right)^T \end{bmatrix}^T \ , \qquad (23)$$

where $\Sigma_{\cdot,[\ell]}^a$ denotes the $\ell$-th column of $\Sigma_\cdot^a$. The scaling parameter

$$\lambda = \alpha^2 (L + \varrho) - L \qquad\qquad (24)$$

determines how far the sigma points are from the mean, where $\alpha$ and $\varrho$ are tuning parameters of the filter.

*2) Prediction:* The sigma points matrix now has a dimension of $L \times (2L + 1)$. This matrix has rows in the space of the previous state, the measurement noise and the process noise:

$$x_{t-1}^a = [x_{t-1}^x \quad x_t^m \quad x_t^0 \quad x_t^V]^T \ . \qquad\qquad (25)$$

Each row has $2L + 1$ sigma points. The sigma points of the previous state and the process noise are passed to a function $g$, which is the motion model defined in Eqns. (14) and (17), to predict the new state:

$$x_t^x = g(u_t, x_{t-1}^x, x_t^V, x_t^0) \ . \qquad\qquad (26)$$

After that, the Gaussian statistics of the new points are computed by

$$\bar{\mu}_t = \sum_{l=0}^{2L} w_m(l) x_{l,t}^x \ , \quad \bar{\Sigma}_t = \sum_{l=0}^{2L} w_c(l) x_{l,t}^x \ , \qquad (27)$$

where

$$\begin{aligned} w_m(0) &= \frac{1}{L+\lambda} \ , \\ w_c(0) &= \frac{1}{L+\lambda} + (1 - \alpha^2 + \beta) \ , \\ w_m(l) = w_c(l) &= \frac{1}{2(L+\lambda)} \ , \qquad (1 \le l \le 2L). \end{aligned}$$

The parameter $\beta$ is a tuning parameter of the filter which has to be set depending on the a priori knowledge of the state probability distribution. The observations at the sigma points are calculated in the sensor model by

$$\bar{z}_t = h(x_t^x) + x_t^m . \tag{28}$$

In our case, the sensor model follows this equation for every sigma point:

$$\bar{z}_t = \frac{1}{c} \|M_t - S_j\| + (t_{k_11} + \delta_j) + x_t^m . \tag{29}$$

3) *Correction:* In the final step, the Gaussian statistics of the observations at the sigma points and the predicted state are calculated to correct the measurement.

$$\mu_{t,z} = \sum_{l=0}^{2L} w_m(l)\bar{z}_{l,t} \tag{30}$$

$$\sigma_z^2 = \sum_{l=0}^{2L} w_c(l)(\bar{z}_{l,t} - \mu_{t,z})^2 .$$

In this step, the cross-covariance between the predicted state and the predicted measurement is also calculated:

$$\Sigma^{x,z} = \sum_{l=0}^{2L} w_c(l)(\bar{x}_{l,t}^x - \bar{\mu}_t)(\bar{z}_{l,t} - \mu_{t,z})^T . \tag{31}$$

Finally, the mean and the covariance of the state are updated by

$$\mu_t = \bar{\mu}_t + K_t(z - \mu_z) \tag{32}$$
$$\Sigma_t = \bar{\Sigma}_t - K_t K_t^T \sigma_z^2 ,$$

where $K_t = \frac{1}{\sigma_z^2}\Sigma^{x,z}$ is the Kalman gain.

Simulation

A simulation compares the two algorithms and the precision of their localization in identical scenarios. We used a fixed trajectory for both algorithms, traversing the entire experimental field of 15 m x 15 m, with a fixed number of three well-placed receivers. For this comparison both algorithms were given measurements with a Gaussian distributed error with standard deviation of 0.3 ms which was added to the reception times. The initialization for the particle filter and the UKF was chosen with more precision at a uniform error of 1 m added to the true receiver position.

Figure 6 shows a comparison of real trajectory, trajectory estimate by particle filtering, and trajectory estimated by Kalman filtering. Both algorithms are well capable to follow the true trajectory of the receiver, based on the incoming signals, even though these are subject to Gaussian measurement errors, with a moderate advantage of the particle filter. A drag towards the outside of a curve is caused by inertia of the constant velocity model until the measurements suggest the changing direction.

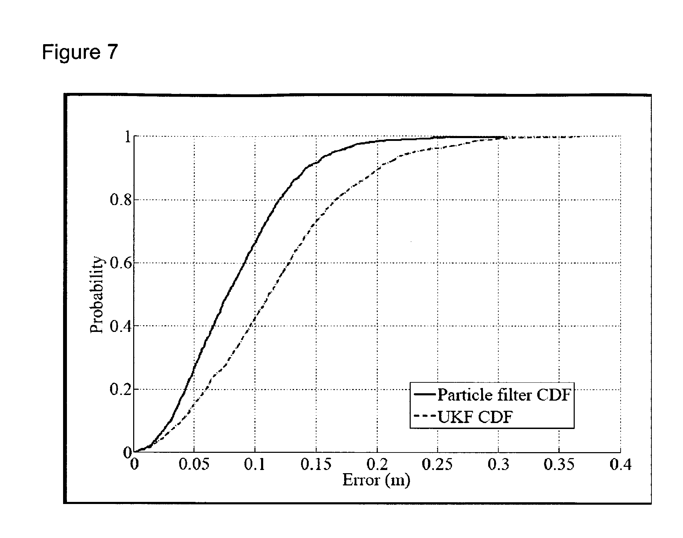

Figure 7 shows the cumulative distribution of errors of the particle filter and the unscented Kalman filter according to the received signals. It shows that the estimation of the particle filter has a moderately smaller error. However, the error of the unscented Kalman Filter is not that much larger, in particular in view of significantly reduced computational costs.

While in the methods described above the positions of transmitters 18a-d are estimated in a preparatory step, it is also possible to simultaneously localize the receiving device 14, estimate the sender offsets, and also the unknown sender positions in an integrated approach using recursive filters like the particle filter, similar as for the standard TDoA setting, i.e. a moving sender.

**Claims**

1. A self-locating mobile receiving device (14) having a receiver (28), in particular an ultrasonic receiver, for receiving signals from a plurality of transmitters (18a-d), each of said transmitters (18a-d) emitting its signals periodically, and an evaluation unit (36) configured to identify a transmitter (18a-d) from a received signal, to determine a reception point in time of the received signal, and to estimate positions $M_{kii}$, $M_{kij}$ of the receiving device (14) based on transmitter positions $\mathbf{S_i}$, $\mathbf{S_j}$ and repeated measurements of transmitter (18a-d) identity and associated reception point in time, the transmitter (18a-d) positions $\mathbf{S_i}$, $\mathbf{S_j}$ being estimated or parameterized in advance,
   **characterized in that**
   the evaluation unit (36) is further configured to estimate, with a recursive filter, the positions $M_{kii}$, $M_{kii}$ of the receiving device (14) and information about transmission points in time and/or mutual offsets $\delta_{ij}$ of transmission points in time, the respective estimation being based on the periodically emitted signals and on the reception points in time so that no synchronization among the transmitters (18a-d) and/or the transmitters (18a-d) and receiving device (14) is required,
   wherein the recursive filter solves an equation system defined by the equation

$$\frac{1}{c}\left(\left\|M_{k_i i} - S_i\right\| - \left\|M_{k_j j} - S_j\right\|\right) = \Delta t_{ij} + \delta_{ij} \, ,$$

   wherein c is a signal velocity of the periodically emitted signals, $\|\cdot\|$ denotes the Euclidian norm and $\Delta \boldsymbol{t_{ij}}$ represents the unsynchronized time difference of arrival of the two signals originated by $\mathbf{S_i}$ and $\mathbf{S_j}$.

2. The mobile receiving (14) device according to claim 1,
   wherein the evaluation unit (36) is configured to identify a transmitter (18a-d) by correlation with a known transmission pattern.

3. The mobile receiving device (14) according to claim 1 or 2,
   wherein the evaluation unit (36) is configured to estimate the position of the receiving device (14) with a time difference of arrival and/or a frequency difference of arrival method.

4. The mobile receiving device (14) according to any of the preceding claims,
   wherein the recursive filter is a particle filter or a Kalman filter.

5. The mobile receiving device (14) according to any of the preceding claims,
   wherein the evaluation unit (36) is configured for a self-calibration determining at least one of

   - identities of transmitters (18a-d) within reach based on an identity of the transmitters encoded in the emitted signals,
   - transmitter (18a-d) positions based on evaluation of time differences observed by the receiver, and
   - a time interval between transmissions of a transmitter (18a-d) based on two or more successively emitted signals received from the transmitter while the receiving device (14) is temporarily stationary.

6. The mobile receiving device (14) according to any of the preceding claims,
   wherein the evaluation unit (36) is configured to evaluate an intensity of a received signal in order to enhance the estimation of the position of the receiving device (14).

7. The mobile receiving device (14) according to any of the preceding claims, comprising an inertial measurement unit for measuring an acceleration, wherein the evaluation unit (36) is configured to include the acceleration in the estimation of the position of the receiving device (14).

8. The mobile receiving device (14) according to any of the preceding claims, comprising an interface (40, 42) to transfer device information including the position of the receiving device (14) to a base station.

9. A System (10) comprising at least one mobile receiving device (14) according to any of the preceding claims and a plurality of transmitters (18a-d), each of the transmitters (18a-d) periodically transmitting signals encoding the transmitter's (18a-d) identity.

10. The system (10) according to claim 9,
    wherein the transmitters (18a-d) transmit their signals independently with respect to a synchronization among the transmitters (18a-d).

11. The system (10) according to claim 9 or 10,
    wherein signaling periods of the periodically transmitted signals and/or transmission points in time of any one of the transmitters (18a-d) are neither communicated to the other transmitters (18a-d) nor to the mobile receiving devices (14).

12. The system (10) according to one of claims 9 to 11,
    wherein the signal transmitted by each of the transmitters (18a-d) is an individual burst or an individual chirp.

13. The system (10) according to one of claims 9 to 12,
    wherein the transmitters (18a-d) comprise an independent power supply, in particular an energy harvesting device.

14. A method for localizing a mobile receiving device (14), in particular with an ultrasonic receiver, wherein a plurality of transmitters (18a-d) each periodically transmit a signal at unsynchronized transmission points in time, and wherein the receiving device (14), upon receipt of a signal, identifies the corresponding transmitter (18a-d), determines a reception point in time, and estimates positions $M_{k_i i}$, $M_{k_j i}$ of the receiving device (14) based on transmitter (18a-d) positions $\mathbf{S_i}$, $\mathbf{S_j}$ and repeated measurements of transmitter (18a-d) identity and associated reception point in time, the transmitter (18a-d) positions $\mathbf{S_i}$, $\mathbf{S_j}$ being estimated or parameterized in advance,
    **characterized in that**
    the receiving device (14) estimates, with a recursive filter, the positions $M_{k_i i}$, $M_{k_j}$ of the receiving device (14) and information about the transmission points in time and/or mutual offsets $\delta_{ij}$ of transmission points in time, the respective estimation being based on the periodically emitted signals and on the reception points in time so that no synchronization among the transmitters (18a-d) and/or the transmitters (18a-d) and receiving device (14) is required, wherein the recursive filter solves an equation system defined by the equation

$$\frac{1}{c}\left(\left\|M_{k_i i} - S_i\right\| - \left\|M_{k_j j} - S_j\right\|\right) = \Delta t_{ij} + \delta_{ij}\,,$$

wherein c is a signal velocity of the periodically emitted signals, $\|\cdot\|$ denotes the Euclidian norm and $\varDelta t_{ij}$ represents the unsynchronized time difference of arrival of the two signals originated by $\mathbf{S_i}$ and $\mathbf{S_j}$.

**Patentansprüche**

1. Selbstortende mobile Empfangsvorrichtung (14) mit einem Empfänger (28), insbesondere einem Ultraschallempfänger, zum Empfangen von Signalen von einer Vielzahl von Sendern (18a-d), die jeweils ihre Signale periodisch aussenden, und mit einer Auswertungseinheit (36), die dafür ausgebildet ist, einen Sender (18a-d) aus einem Empfangssignal zu identifizieren, einen Empfangszeitpunkt des Empfangssignals zu bestimmen und Positionen $M_{k_i i}$, $M_{k_j j}$ der Empfangsvorrichtung (14) basierend auf Positionen $\mathbf{S_i}$, $\mathbf{S_j}$ der Sender (18a-d) und wiederholten Messungen von Identität eines Sender (18a-d) und zugehörigem Empfangszeitpunkt zu schätzen, wobei die Positionen $\mathbf{S_i}$, $\mathbf{S_j}$ der Sender (18a-d) vorab geschätzt oder parametriert werden,
   **dadurch gekennzeichnet,**
   **dass** die Auswertungseinheit (36) weiterhin dafür ausgebildet ist, mit einem rekursiven Filter die Positionen $M_{k_i i}$, $M_{k_j j}$ der Empfangsvorrichtung (14) und Informationen über Sendezeitpunkte und/oder den gegenseitigen Versatz $\delta_{ij}$ von Sendezeitpunkten zu schätzen, wobei die jeweilige Schätzung auf den periodisch ausgesandten Signalen und den Empfangszeitpunkten basiert, so dass keine Synchronisierung zwischen den Sendern (18a-d) und/oder den Sendern (18a-d) und der Empfangsvorrichtung (14) erforderlich ist, wobei das rekursive Filter ein Gleichungssystem löst, das durch die Gleichung

$$\frac{1}{c}\left(\left\|\boldsymbol{M}_{k_i i} - \boldsymbol{S}_i\right\| - \left\|\boldsymbol{M}_{k_j j} - \boldsymbol{S}_j\right\|\right) = \Delta t_{ij} + \delta_{ij} \, ,$$

definiert ist, wobei c eine Signalgeschwindigkeit der periodisch ausgesandten Signale ist, $\|\cdot\|$ die euklidische Norm bezeichnet und $\Delta t_{ij}$ die nicht synchronisierten Zeitunterschiede der Ankunft der beiden von $\boldsymbol{S}_i$ und $\boldsymbol{S}_j$ ausgehenden Signal darstellt.

**2.** Mobile Empfangsvorrichtung (14) nach Anspruch 1,
wobei die Auswertungseinheit (36) dafür ausgebildet ist, einen Sender (18a-d) durch Korrelation mit einem bekannten Sendemuster zu identifizieren.

**3.** Mobile Empfangsvorrichtung (14) nach Anspruch 1 oder 2,
wobei die Auswertungseinheit (36) dafür ausgebildet ist, die Position der Empfangsvorrichtung (14) nach dem Verfahren des Zeitunterschieds bei Ankunft (TDoA, time distance of arrival) oder des Frequenzunterschieds bei Ankunft (FDoA, frequency distance of arrival) zu bestimmen.

**4.** Mobile Empfangsvorrichtung (14) nach einem der vorhergehenden Ansprüche, wobei das rekursive Filter ein Partikelfilter oder ein Kalmanfilter ist.

**5.** Mobile Empfangsvorrichtung (14) nach einem der vorhergehenden Ansprüche, wobei die Auswertungseinheit (36) für eine Eigenkalibration ausgebildet ist, die mindestens eine der folgenden Größen bestimmt:

- Identitäten der Sender (18a-d) in Reichweite basierend auf einer in den ausgesandten Signalen codierten Identität der Sender,
- Positionen der Sender (18a-d) basierend auf einer Auswertung der von dem Empfänger beobachteten Zeitunterschiede, und
- ein Zeitintervall zwischen Sendevorgängen eines Senders (18a-d) basierend auf zwei oder mehr nacheinander ausgesandten Signalen, die von der Empfangsvorrichtung (14) empfangen werden, während sie vorübergehend ruht.

**6.** Mobile Empfangsvorrichtung (14) nach einem der vorhergehenden Ansprüche, wobei die Auswertungseinheit (36) dafür ausgebildet ist, eine Intensität eines Empfangssignals auszuwerten, um die Schätzung der Position der Empfangsvorrichtung (14) zu verbessern.

**7.** Mobile Empfangsvorrichtung (14) nach einem der vorhergehenden Ansprüche, die eine Inertialmesseinrichtung zur Messung einer Beschleunigung aufweist, wobei die Auswertungseinheit (36) dafür ausgebildet ist, die Beschleunigung in die Schätzung der Position der Empfangsvorrichtung (14) einzuschließen.

**8.** Mobile Empfangsvorrichtung (14) nach einem der vorhergehenden Ansprüche, die eine Schnittstelle (40, 42) aufweist, um Geräteinformationen einschließlich der Position der Empfangsvorrichtung (14) an eine Basisstation zu übertragen.

**9.** System (10) umfassend mindestens eine mobile Empfangsvorrichtung (14) nach einem der vorhergehenden Ansprüche und eine Vielzahl von Sendern (18a-d), wobei jeder Sender (18a-d) periodisch Signale aussendet, welche die Identität des Senders (18a-d) codieren.

**10.** System (10) nach Anspruch 9,
wobei die Sender (18a-d) ihre Signale unabhängig von einer Synchronisierung unter den Sendern (18a-d) senden.

**11.** System (10) nach Anspruch 9 oder 10,
wobei keiner der Sender (18a-d) den anderen Sendern (18a-d) oder der mobilen Empfangseinrichtung (14) Signalperioden der periodisch ausgesandten Signale und/oder Sendezeitpunkte mitteilt.

**12.** System (10) nach einem der Ansprüche 9 bis 11,
wobei das von den Sendern (18a-d) ausgesandte Signal ein individueller Burst oder ein individueller Chirp ist.

**13.** System (10) nach einem der Ansprüche 9 bis 12,

wobei die Sender (18a-d) eine unabhängige Stromversorgung aufweisen, insbesondere eine Energiegewinnungseinrichtung.

14. Verfahren zum Orten einer mobilen Empfangsvorrichtung (14), insbesondere mit einem Ultraschallempfänger, wobei eine Vielzahl von Sendern (18a-d) jeweils ein Signal periodisch zu nicht synchronisierten Sendezeitpunkten aussendet und wobei die Empfangsvorrichtung (14) nach Empfang des Signals den zugehörigen Sender (18a-d) identifiziert, einen Empfangszeitpunkt bestimmt und Positionen $M_{k_i i}$, $M_{k_j j}$ der Empfangsvorrichtung (14) auf Basis von Positionen $S_i$, $S_j$ der Sender (18a-d) und wiederholten Messungen der Identität eines Senders (18a-d) und eines zugehörigen Empfangszeitpunkts schätzt, wobei die Positionen $S_i$, $S_j$ der Sender (18a-d) vorab geschätzt oder parametriert werden,
**dadurch gekennzeichnet,**
**dass** die Empfangsvorrichtung (14) mit einem rekursiven Filter die Positionen $M_{k_i i}$, $M_{k_j j}$ der Empfangsvorrichtung (14) und Informationen über Sendezeitpunkte und/oder den gegenseitigen Versatz $\delta_{ij}$ von Sendezeitpunkten schätzt, wobei die jeweilige Schätzung auf den periodisch ausgesandten Signalen und den Empfangszeitpunkten basiert, so dass keine Synchronisierung zwischen den Sendern (18a-d) und/oder den Sendern (18a-d) und der Empfangsvorrichtung (14) erforderlich ist, wobei das rekursive Filter ein Gleichungssystem löst, das durch die Gleichung

$$\frac{1}{c}\left(\left\|M_{k_i i} - S_i\right\| - \left\|M_{k_j j} - S_j\right\|\right) = \Delta t_{ij} + \delta_{ij}\,,$$

definiert ist, wobei c eine Signalgeschwindigkeit der periodisch ausgesandten Signale ist, $\|\cdot\|$ die euklidische Norm bezeichnet und $\Delta t_{ij}$ die nicht synchronisierten Zeitunterschiede der Ankunft der beiden von $S_i$ und $S_j$ ausgehenden Signal darstellt.

## Revendications

1. Dispositif récepteur mobile à localisation automatique (14) ayant un récepteur (28), en particulier un récepteur d'ultrasons, pour recevoir des signaux depuis une pluralité d'émetteurs (18a-d), chacun desdits émetteurs (18a-d) émettant ses signaux périodiquement, et une unité d'évaluation (36) configurée pour identifier un émetteur (18a-d) depuis un signal reçu, pour déterminer un point de réception dans le temps du signal reçu, et pour estimer des positions $M_{k_i i}$, $M_{k_j j}$ du dispositif récepteur (14) en se basant sur les positions $S_i$, $S_j$ des émetteurs et sur des mesures répétées de l'identité des émetteurs (18a-d) et du point de réception associé dans le temps, les positions $S_i$, $S_j$ des émetteurs (18a-d) étant estimées ou paramétrées à l'avance,
**caractérisé en ce que**
l'unité d'évaluation (36) est en outre configurée pour estimer, avec un filtre récursif, les positions $M_{k_i i}$, $M_{k_j j}$ du dispositif récepteur (14) et des informations concernant les points de transmission dans le temps et/ou des décalages mutuels $\delta_{ij}$ des points de transmission dans le temps, l'estimation respective étant basée sur les signaux périodiquement émis et sur les points de réception dans le temps, de sorte qu'il n'est pas nécessaire d'assurer une synchronisation parmi les émetteurs (18a-d) et/ou les émetteurs (18a-d) et le dispositif récepteur (14),
dans lequel le filtre récursif résout un système d'équations défini par l'équation

$$\frac{1}{c}\left(\left\|M_{k_i i} - S_i\right\| - \left\|M_{k_j j} - S_j\right\|\right) - \Delta t_{ij} + \delta_{ij}$$

dans laquelle c'est une vitesse des signaux émis périodiquement, $\|\cdot\|$ désigne la norme euclidienne et $\Delta t_{ij}$ représente la différence de temps non synchronisée de l'arrivée des deux signaux dont l'origine est $S_i$ et $S_j$.

2. Dispositif récepteur mobile (14) selon la revendication 1,
dans lequel l'unité d'évaluation (36) est configurée pour identifier un émetteur (18a-d) par corrélation avec un motif d'émission connu.

3. Dispositif récepteur mobile (14) selon la revendication 1 ou 2,
dans lequel l'unité d'évaluation (36) est configurée pour estimer la position du dispositif récepteur (14) avec une différence temporelle de l'arrivée et/ou une différence de fréquence de méthode d'arrivée.

4. Dispositif récepteur mobile (14) selon l'une quelconque des revendications précédentes, dans lequel le filtre récursif est un filtre à particules ou un filtre de Kalman.

5. Dispositif récepteur mobile (14) selon l'une quelconque des revendications précédentes, dans lequel l'unité d'évaluation (36) est configurée pour un auto calibrage en déterminant au moins un paramètre parmi

- les identités des émetteurs (18a-d) qui peuvent être atteints, en se basant sur une identité des émetteurs codés dans les signaux émis,
- les positions des émetteurs (18a-d) en se basant sur l'évaluation des différences temporelles observées par le récepteur, et
- un intervalle temporel entre les émissions d'un émetteur (18a-d) en se basant sur deux ou plusieurs signaux émis successifs reçus depuis l'émetteur alors que le dispositif récepteur (14) est temporairement stationnaire.

6. Dispositif récepteur mobile (14) selon l'une quelconque des revendications précédentes, dans lequel l'unité d'évaluation (36) est configurée pour évaluer une intensité d'un signal reçu afin d'améliorer l'estimation de la position du dispositif récepteur (14).

7. Dispositif récepteur mobile (14) selon l'une quelconque des revendications précédentes, comprenant une unité de mesure à inertie pour mesurer une accélération, dans lequel l'unité d'évaluation (36) est configurée pour inclure l'accélération dans l'estimation de la position du dispositif récepteur (14).

8. Dispositif récepteur mobile (14) selon l'une quelconque des revendications précédentes, comprenant une interface (40, 42) pour transférer des informations de dispositif incluant la position du dispositif récepteur (14) vers une station de base.

9. Système (10) comprenant au moins un dispositif récepteur mobile (14) selon l'une quelconque des revendications précédentes, et une pluralité d'émetteurs (18a-d), chacun des émetteurs (18a-d) émettant périodiquement des signaux qui codent l'identité de l'émetteur (18a-d).

10. Système (10) selon la revendication 9, dans lequel les émetteurs (18a-d) émettent leurs signaux indépendamment à l'égard d'une synchronisation parmi les émetteurs (18a-d).

11. Système (10) selon la revendication 9 ou 10, dans lequel les périodes de signalisation des signaux périodiquement émis et/ou les points de transmission dans le temps de l'un quelconque des émetteurs (18a-d) ne sont communiqué(e)s ni aux autres émetteurs (18a-d) ni aux dispositifs de réception mobiles (14).

12. Système (10) selon l'une des revendications 9 à 11, dans lequel le signal émis par chacun des émetteurs (18a-d) est une salve individuelle ou un signal "chirp" individuel.

13. Système (10) selon l'une quelconque des revendications 9 à 12, dans lequel les émetteurs (18a-d) comprennent une alimentation de puissance indépendante, en particulier un dispositif de collecte d'énergie.

14. Procédé pour localiser un dispositif récepteur mobile (14), en particulier avec un récepteur d'ultrasons, dans lequel une pluralité d'émetteurs (18a-d) émettent chacun périodiquement un signal à des points d'émission non synchronisés dans le temps, et dans lequel le dispositif récepteur (14), lors de la réception d'un signal, identifie l'émetteur correspondant (18a-d), détermine un point de réception dans le temps, et estime des positions $M_{kii}$, $M_{kj}$ du dispositif récepteur (14) en se basant sur les positions $S_i$, $S_j$ des émetteurs (18a-d) et sur des mesures répétées de l'identité des émetteurs (18a-d) et du point de réception associé dans le temps, les positions $M_{kii}$, $M_{kj}$ des émetteurs (18a-d) étant estimées ou paramétrées à l'avance,
**caractérisé en ce que**
le dispositif récepteur (14) estime, avec un filtre récursif, les positions $M_{kii}$, $M_{kj}$ du dispositif récepteur (14) et des informations concernant les points de transmission dans le temps et/ou des décalages mutuels $\delta_{ij}$ des points de

transmission dans le temps, l'estimation respective étant basée sur les signaux périodiquement émis et sur les points de réception dans le temps, de sorte qu'il n'est pas nécessaire d'assurer une synchronisation parmi les émetteurs (18a-d) et/ou les émetteurs (18a-d) et le dispositif récepteur (14),
dans lequel le filtre récursif résout un système d'équations défini par l'équation

$$\frac{1}{c}\left(\left\|M_{k_i i} - S_i\right\| - \left\|M_{k_j j} - S_j\right\|\right) - \Delta t_{ij} + \delta_{ij}$$

dans laquelle c est une vitesse des signaux émis périodiquement, $\|\cdot\|$ désigne la norme euclidienne et $\Delta t_{ij}$ représente la différence de temps non synchronisée de l'arrivée des deux signaux dont l'origine est $S_i$ et $S_j$.

# Figure 1

10

18a 18b 18d

18c

12

14

16

# Figure 2

18

22 — Clock

μC

20 24 26

Figure 3

Figure 4

## Figure 5

## Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130083631 A1

- US 20120214515 A1

### Non-patent literature cited in the description

- **J. WENDEBERG et al.** Self-Localization based on Ambient Signals. *Theoretical Computer Science,* 2012, vol. 453, 98-109
- **T. JANSON et al.** Self-Localization Application for iPhone using only Ambient Sound Signals. *Proceedings of the 2010 International Conference on Indoor Positioning and Indoor Navigation (IPIN),* November 2010, 259-268
- **J. WENDEBERG et al.** Calibration-Free TDOA Self-Localization. *Journal of Location Based Services,* 2013
- **F. HÖFLINGER et al.** Acoustic Self-calibrating System for Indoor Smartphone Tracking (ASSIST). *Proceedings of the 2012 International Conference on Indoor Positioning and Indoor Navigation (IPIN),* 2012
- **J. KRUSKAL et al.** Multidimensional Scaling. Sage Publications, 1978
- **J. WENDEBERG et al.** Robust Tracking of a Mobile Beacon Using Time Differences of Arrival with Simultaneous Calibration of Receiver Positions. *Proceedings of 2012 International Conference on Indoor Positioning and Indoor Navigation (IPIN),* 2012
- New Extension of the Kalman Filter to Nonlinear Systems. **JULIER ; UHLMAN.** AeroSense'97. International Society for Optics and Photonics, 1997, 401-422